# EUROPEAN PATENT SPECIFICATION

(11) **EP 1 728 986 B1**
(45) Date of publication and mention of the grant of the patent: **17.10.2007**
(21) Application number: 06006918.4
(22) Date of filing: 31.03.2006
(51) Int. Cl.: F01N 7/18, F16F 1/373, F16F 1/376, B62D 27/04

(54) **Exhaust system support structure and support structure for component of vehicle**
Halteanordnung für eine Abgasanlage und Halteanordnung für eine Fahrzeugkomponente
Structure de support pour système d'échappement et structure de support pour un élément de véhicule

(30) Priority: 31.05.2005 JP 2005159082
(43) Date of publication of application: 06.12.2006
(73) Proprietor: HONDA MOTOR CO., Ltd., Tokyo 107-8556 (JP)
(72) Inventor: Koyanagi, Masashi, Wako-shi, Saitama, 351-0193 (JP); Tokumasu, Nobutaka, Wako-shi, Saitama, 351-0193 (JP); Yamazaki, Hayato, Wako-shi, Saitama, 351-0193 (JP)
(74) Representative: Rupp, Christian

(56) References cited:
- GB-A- 618 962
- GB-A- 1 218 269
- US-A- 3 990 737
- US-A- 6 024 338
- PATENT ABSTRACTS OF JAPAN vol. 2003, no. 03, 5 May 2003 (2003-05-05) & JP 2002 340090 A (MATSUSHITA ELECTRIC IND CO LTD), 27 November 2002 (2002-11-27)

## Description

The present invention relates to an exhaust system support structure and a support structure for a component of a vehicle, and, more particularly, to an exhaust system support structure and a support structure for a component of a vehicle, which are suitable to support an exhaust system of a motorcycle or the like.

As an exhaust system support structure of a motorcycle, one has heretofore been known in which an exhaust system is fixedly supported by use of a band on one side of which a projecting portion is formed, and the projecting portion of the band is fastened to the vehicle body side with a bolt. With regard to the support structure, since the exhaust system and the vehicle body are coupled together with the bolt, there has been a problem that there is a requirement to pay attention so as to make it difficult for heat and vibration occurring in the exhaust system to be transferred to the vehicle body side.

In Japanese Utility Model Laid-Open Publication No. H03-118219, disclosed is an exhaust system support structure in which a plate-shaped stay into which a substantially cylindrical rubber member is fitted is disposed between a vehicle-body-side attachment portion and an attachment portion of an exhaust system in order to solve the above-described problem. With the exhaust system support structure, it is possible to significantly reduce the transfer of vibration and heat to the vehicle side, since the exhaust system is coupled in a floating structure by using a rubber member serving as a vibration absorber.

However, since the exhaust system support structure described in Japanese Utility Model Laid-Open Publication No. H03-118219 has a structure in which since a groove provided in an outermost peripheral surface of the substantially cylindrical rubber member along the circumferential direction thereof, and a support hole provided in the plate-shaped stay are allowed to be fitted in each other, the shearing force caused due to the weight of the exhaust system and the vibration of the exhaust system concentrates at the groove portion of the rubber member, resulting in increasing the load applied on the rubber member. In addition, there has been a problem that, when attempting to increase the contact area between the rubber member and the plate-shaped stay so as to solve the above problem, it is necessary to increase the plate thickness of the plate-shaped stay, resulting in an increase in weight. Moreover, since the portion of the circumferential groove of the rubber member is thinner than the other portion, the portion of the circumferential groove is thickened in order to improve the durability, which has caused the rubber member to be enlarged and the weight thereof to be increased.

An object of the present invention is to provide an exhaust system support structure and a support structure for a component of a vehicle, which can solve the above-described problems of the prior art, and with which it is possible to avoid an increase in the weight of the support structure, and to improve the durability of a rubber member.

A first feature of the present invention for the purpose of achieving the above object is as follows. An exhaust system support structure includes: an exhaust system which includes an exhaust pipe connected to an exhaust port of an internal combustion engine and extending toward the rear of a vehicle body, and a silencer provided to the rear of the exhaust pipe; a stay which is provided on a seat frame and has a support hole; and a flange portion provided to the silencer. Here, a rubber member is fitted into the support hole of the stay, and the flange portion is coupled to the stay with the rubber member interposed therebetween to thereby fix the silencer to the seat frame side. The support hole of the stay having a cylindrical shape has a convex portion on the inner circumferential surface thereof along a circumferential direction, and the rubber member having also a cylindrical shape has a groove on the outer circumferential surface thereof along a circumferential direction, the groove being fitted in the convex portion.

A second feature of the present invention is that a space is provided between a convex face of the convex portion of the support hole and a bottom face of the groove of the rubber member.

A third feature of the present invention is that a concave portion is provided in the stay, and the support hole having a cylindrical shape is provided in the bottom of the concave portion.

A fourth feature of the present invention is that the bottom of the concave portion is provided so as to be offset toward the outer side of the vehicle body with respect to the center of the support hole in an axial direction of the support hole.

A fifth feature of the present invention is as follows: in a support structure which supports a component of a vehicle with a rubber member interposed, a support member is provided with a support hole. The support hole which has a cylindrical shape and is provided with an inward convex portion along a circumferential direction on an inner circumferential surface of the support hole. The rubber member which has a cylindrical shape and which is fitted in the support hole is provided with a groove being fixed to the convex portion on an outer peripheral surface along a circumferential direction of the rubber member.

A sixth feature of the present invention is that a space is provided between a convex face of the convex portion of the support hole and a bottom face of the groove of the rubber member.

### [Effects of the Invention]

With a first aspect of the present invention, since the support hole of the stay has a cylindrical shape on an inner circumferential surface of which an inwardly convex portion extending along a circumferential direction thereof is provided, and the rubber member has a cylindrical shape on an outer peripheral surface of which a groove extending along a circumferential direction thereof is provided, the groove being fitted in the convex portion, it is possible to improve the durability of the rubber member by reducing the pressure per unit area without increasing either a thickness of the stay or a groove width of the rubber member. Thus, it is possible to downsize and to reduce the weight of the rubber member and the stay. In addition, since the convex portion and the groove are fitted in each other, it is possible to prevent the rubber member from shifting in the axial direction.

With a second aspect of the present invention, since a space is provided between a convex face of the convex portion of the support hole and a bottom face of the groove of the rubber member, it is easy for the rubber member to deform because the space serves as a clearance effective when the rubber member deforms, so it is possible to increase the vibration absorption efficiency.

With a third aspect of the present invention, since a concave portion is provided in the stay, and the support hole which has a cylindrical shape is provided in the bottom of the concave portion, the wall formed around the bottom of the concave portion in which the cylindrical support hole is provided serves as a reinforcing rib, so that it is possible to significantly increase the strength regarding the periphery of the support hole without increasing the plate thickness of the stay.

With a fourth aspect of the present invention, since the bottom of the concave portion is provided so as to be offset toward the outer side of the vehicle body with respect to the center of the support hole in an axial direction of thereof, it is possible to give the stay a further margin of strength by reducing the moment load applied by the silencer to the bottom of the concave portion through the support hole. In addition, it is possible to reduce the weight of the stay by thinning the stay.

With a fifth or sixth aspect of the present invention, it is possible to improve the durability of the rubber member by reducing the pressure per unit area without increasing either a thickness of the stay or a groove width of the rubber member. Thus, it is possible to downsize and to reduce the weight of the rubber member and the stay. In addition, since the convex portion and the groove are fitted in each other, it is possible to prevent the rubber member from shifting in the axial direction. Moreover, since a space is provided between a convex face of the convex portion of the support hole and a bottom face of the groove of the rubber member, it becomes easy for the rubber member to deform because the space serves as a clearance effective when the rubber member deforms, so it is possible to increase the absorption efficiency of vibration .
Fig. 1 is a side view of an embodiment of a motorcycle in which the present invention is implemented.
Fig. 2 is a schematic diagram of a coupling state of a muffler stay and a silencer to which the present invention is applied.
Fig. 3 is an exploded perspective view of peripheral parts of the muffler stay to which the present invention is applied.
Fig. 4A is a front view of the muffler stay to which the present invention is applied.
Fig. 4B is a side view of the muffler stay to which the present invention is applied.
Fig. 5 shows a sectional view taken along the line A-A of Fig. 4A, and a sectional view of a rubber member.
Fig. 6 is a sectional structural view of the muffler stay and the silencer in a state where they are coupled.
Fig. 7 is an exploded perspective view showing a configuration of a conventional exhaust system support structure.
Fig. 8 is a sectional view showing a configuration of the conventional exhaust system support structure.

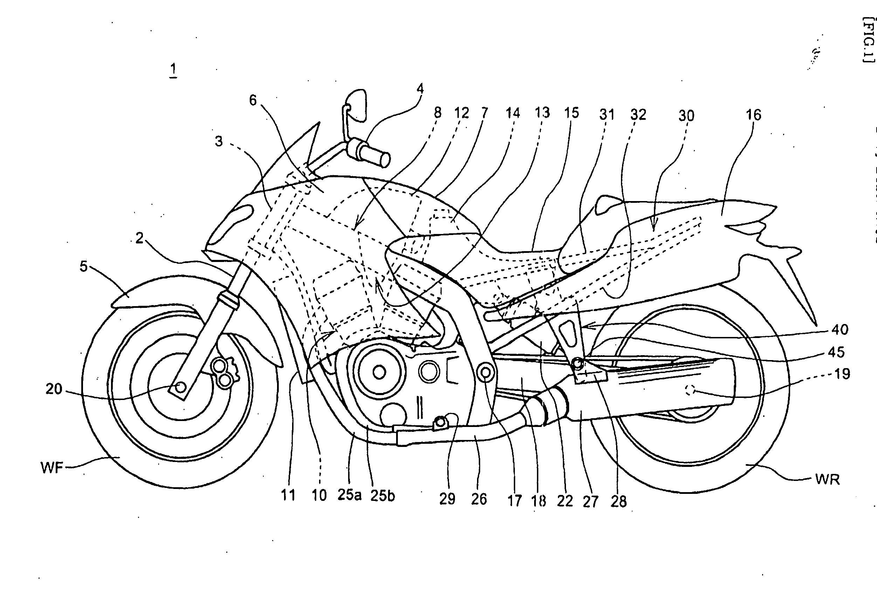

Detailed description will be given below of a preferable embodiment of the present invention with reference to the drawings. Fig. 1 is a side view of the embodiment of a motorcycle in which the present invention is implemented. With regard to a head tube 3 of the motorcycle 1, a left-right pair of a main frames 8 extends therefrom obliquely downward toward the rear of a vehicle body. A V-type engine 10 as an internal combustion engine is mounted below the main frames 8. A swing arm 18 is pivoted to rear portions of the main frames 8 via a pivot 17 swingably in an up and down direction. A lower end of a rear cushion 22 is attached to an upper front portion of the swing arm 18. A rear wheel WR is rotatably pivoted to a rear end of the swing arm 18 via an axle 19. An upper end of the rear cushion 22 is pivoted to a support portion extending to the rear of the main frames 8. A left-right pair of front forks 2 are pivotally attached to the head tube 3 so that the front forks 2 can be steered with a handle bar 4. A front wheel WF is rotatably pivoted via an axle 20 under a front fender 5 having a substantially crescent shape. An air-cleaner box 12 and a throttle body 13 are accommodated in an upper cowl 6 covering most of the engine 10 and a radiator 11. A fuel tank 14 which is provided extending to the area under a seat 15 is disposed below a top cover 7 which is disposed next to the upper cowl 6. A seat frame 30 constituted of an upper tube 31 and a lower tube 32 are provided upwardly to the rear of the main frame 8. The seat frame 30 is covered from the outside by a seat cowl 16. An exhaust system of the motorcycle 1 includes: exhaust pipes 25a, 25b connected to exhaust ports of front and rear cylinders of the engine 10; a center exhaust pipe 26 for collecting the exhaust pipes 25a, 25b; and a silencer 27 connected to the center exhaust pipe 26. The center exhaust pipe 26 is coupled to a lower portion of the engine 10 via an attachment stay 29. The silencer 27 is fixed to the vehicle body side by fastening a flange portion 28 welded to a front end portion of the silencer 27 and a plate-shaped muffler stay 40 mounted on the seat frame 30. An exhaust system support structure of the present invention is applied to a support hole 45 of the muffler stay 40.

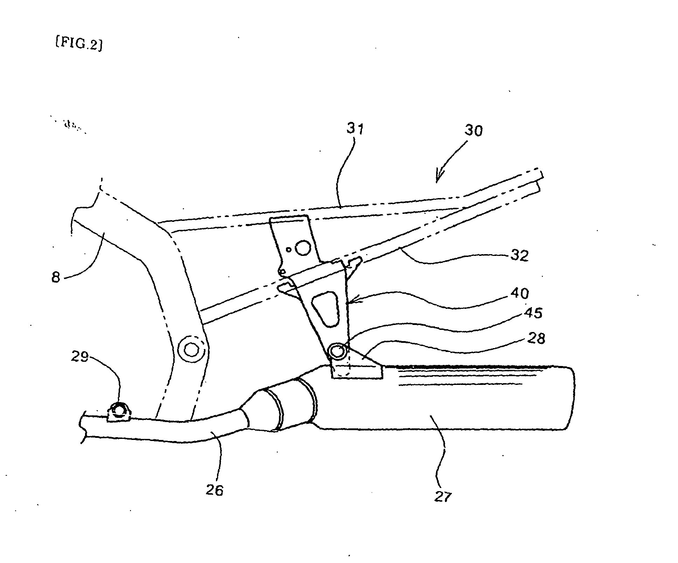

Fig. 2 is a schematic diagram of a coupling state of the muffler stay 40 and the silencer 27. The same reference numerals as the above numerals represent the same or equivalent portions. The muffler stay 40 is mounted so as to extend between the upper tube 31 and the lower tube 32, so that the muffler stay 40 is also used as a reinforcement member of the seat frame 30. Since the silencer 27 occupies a large proportion of weight as compared to the entire exhaust system, even if the center exhaust pipe 26 is coupled to the lower portion of the engine 10 via the attachment stay 29, the weight load applied to the support hole 45 of the muffler stay 40 is not light.

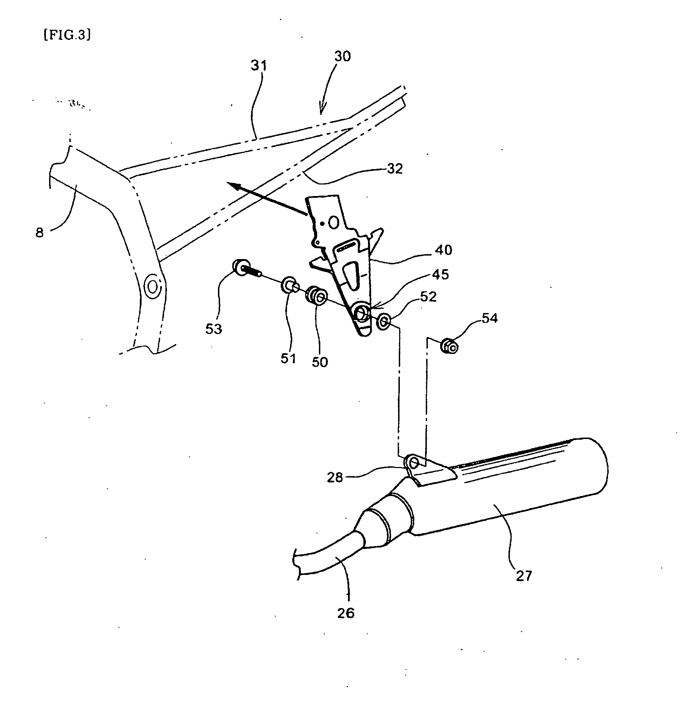

Fig. 3 is an exploded perspective view of peripheral parts of the muffler stay 40. The same reference numerals as the above numerals represent the same or equivalent portions. A substantially cylindrical rubber member 50 is fitted into the support hole 45 of the muffler stay 40. In the outer peripheral surface of the rubber member 50, a groove extending along a circumferential direction is provided. The groove is formed so as to be fitted in the support hole 45. When the muffler stay 40 and the silencer 27 are coupled to each other, the rubber member is fitted into the support hole 45, and, thereafter, a bolt 53 is passed through a collar 51, the rubber member 50, a washer 52, and the flange portion 28 of the silencer 27 in this order from the inner side of the vehicle body, and then fastened with a nut 54 on the outer side of the vehicle body.

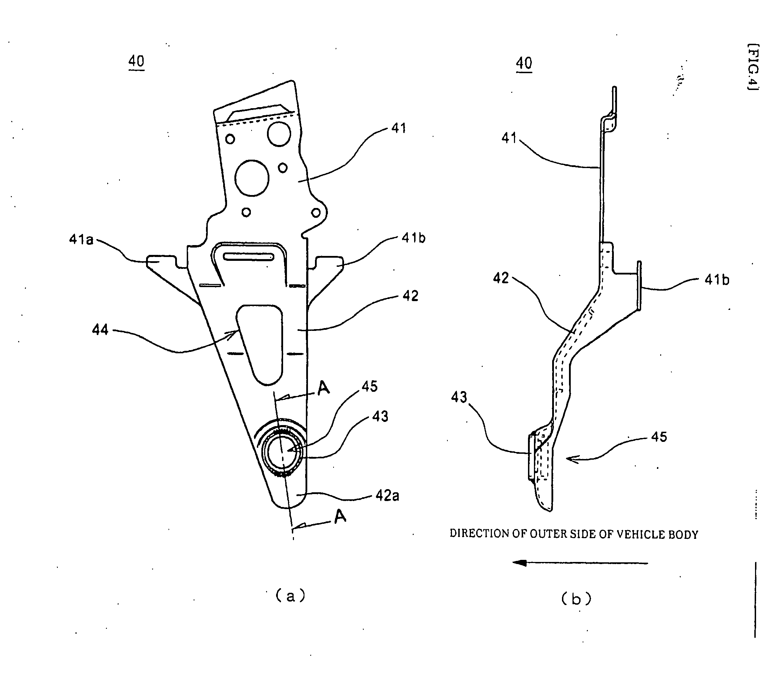

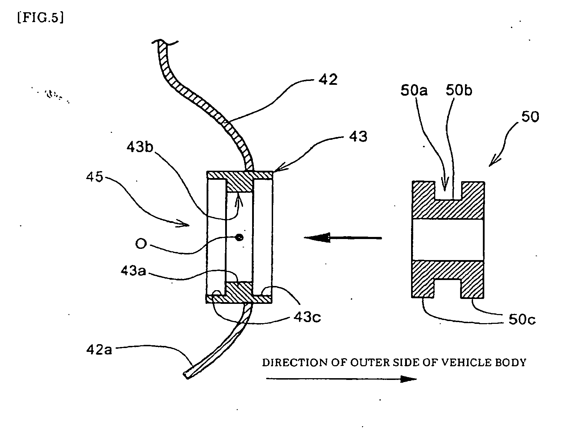

Figs. 4A and 4B are a front view (a state when viewing from the inner side of the vehicle body) and a side view of the muffler stay 40, respectively. Fig. 5 shows a sectional view taken along the line A-A of Fig. 4A, and a sectional view of the rubber member 50. The same reference numerals as the above numerals represent the same or equivalent portions. The muffler stay 40 formed of a thin metal plate is made, by integrating an upper plate 41 and attachment arms 41 a, 41 b, which are attached to the seat frame 30, as well as a lower plate 42 in which a substantially triangular lightening hole 44 is provided. As shown in Fig. 5, the support hole 45 is formed by welding a cylindrical fit member 43 to a lower end portion 42a of the lower plate 42 to which a concave portion having a truncated-cone shape is provided so as to face toward the inner side of the vehicle body. In other words, the support hole 45 is provided in the bottom of the concave portion which is provided so as to be offset toward the outer side of the vehicle body with respect to the center of the support hole 45 (indicated by the point O in Fig. 5).

Along the inner circumferential portion of the fit member 43, provided is a rib 43a as an inwardly convex portion which fits into a groove 50a of the rubber member 50 extending along a circumferential direction thereof. The rib 43a serves to prevent the rubber member 50 and the silencer 27 from moving in an axial direction when the silencer 27 is coupled. It should be noted that, in this embodiment, the exhaust system support structure is configured so that a bottom face 50b of the groove 50a and a convex face 43b of the rib 43a will not come into contact with each other when the groove 50a and the rib 43a are fitted in each other.

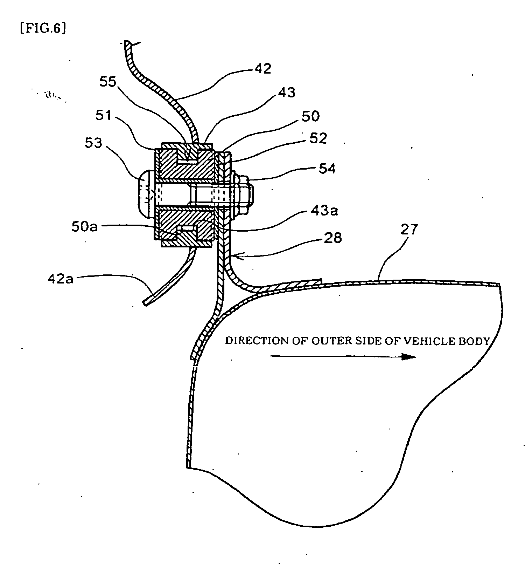

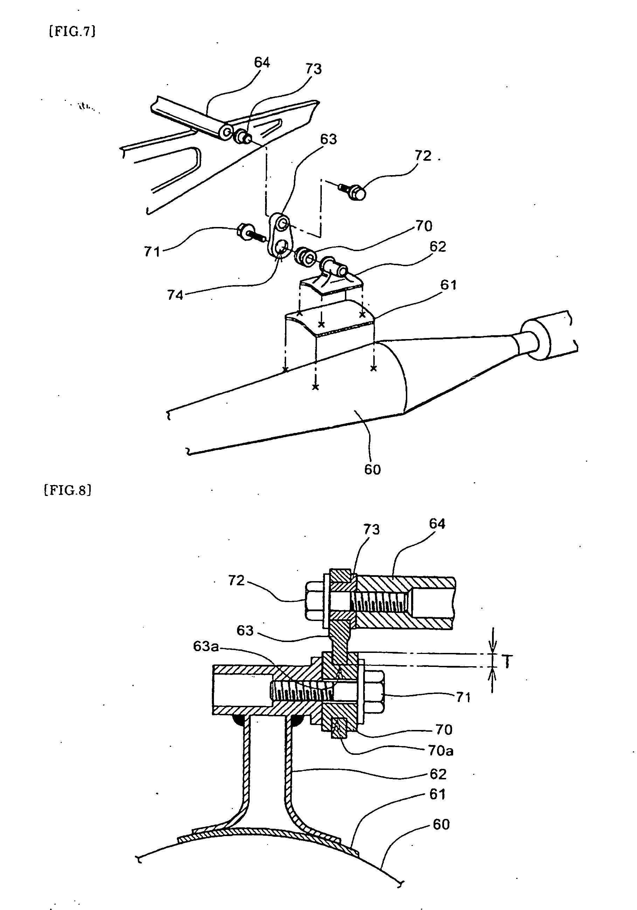

Fig. 6 is a sectional structural view of the muffler stay 40 and the silencer 27 when they are being coupled. The same reference numerals as the above numerals represent the same or equivalent portions. The largest difference of the exhaust system support structure according to the present invention compared to a conventional system is that the cylindrical fit member 43 is provided so that the rubber member 50, on its outermost peripheral surface 50c, bears the weight of the silencer 27. Here, Figs. 7 and 8 are given for reference in comparison with the conventional exhaust system support structure.

Fig. 7 is an exploded perspective view showing a configuration of the conventional exhaust system support structure. An attachment member 62 is welded to an exhaust system 60 with a base plate 61 interposed therebetween. A muffler stay 63 is fastened to a vehicle-side attachment portion 64 by a bolt 72 with a collar 73 inserted therebetween. The muffler stay 63 also has a support hole 74 into which a substantially cylindrical rubber member 70 is fitted as in the case of the exhaust system support structure according to the present invention. The muffler stay 63 and the attachment member 62 are coupled by fitting the rubber member 70 into the muffler stay 63, passing a bolt 71 therethrough, and then fastening the bolt 71 and the attachment member 62 in which a female screw thread is cut.

Fig. 8 is a sectional view of the exhaust system 60 and the muffler stay 63 when they are being coupled. In this conventional system, since the support hole 74 provided in the muffler stay 63 is merely a circular hole with a cut face 63a resulting from the plate thickness, a bottom face 70a of the fit groove of the rubber member 70 are subject to bear all the weight of the exhaust system 60 and/or the shock generated due to vibration. In this case, for the purpose of reducing the shearing force applied on the rubber member 70, it is thinkable to increase the thickness of the muffler stay 63 and the width of the groove of the rubber member to thereby increase the width of contact in the axial direction, or to increase the fit diameter of the rubber member 70 to thereby increase the length of contact in the circumferential direction. However, in any of the both cases, an increase in the weight of the muffler stay 63 and the rubber member 70 is caused. In addition, with regard to the conventional system, there has been a problem that the thickness (T shown in Fig. 8) forming portion from the bottom face 70a of the fit groove of the rubber member 70 to the outermost peripheral surface thereof only serves as a catch portion for preventing the shift in the axial direction, and does not effectively function as a shock absorbing cushion absorbing shock.

Referring back to Figs. 5 and 6, with the exhaust system support structure of the present invention, the fit member 43 is provided, and an inner circumferential surface 43c and the outermost peripheral surface 50c of the rubber member 50 are allowed to abut each other to thereby significantly increase the width of contact, so that it is possible to improve the durability of the rubber member 50 by reducing the pressure per unit area without increasing the thickness of the muffler stay 40. In addition, it is also possible to effectively use the thickness forming portion up to the outermost peripheral surface 50c of the rubber member 50 as a shock absorbing member. Thus, due to the improvement in the shock absorbing capacity obtained without increasing either the inner diameter or the outer diameter of the rubber member 50, it is possible to downsize and to reduce the weight of the rubber member and the muffler stay. In addition, since a space 55 created between the bottom face 50b of the groove 50a and the convex face 43b of the rib 43a serves as a clearance effective when the rubber member 50 deforms, it is easier for the rubber member 50 to deform in the axial direction and the direction perpendicular thereto, resulting in a further increase in terms of a vibration absorption efficiency. In this way, since a sufficient shock absorbing effect can be obtained with only one flange portion for supporting the silencer 27, it is possible to reduce the number of parts. Moreover, by using one flange portion, the flexibility of the installation position is increased. So, it is possible to provide the flange portion 28 at a front end portion of the silencer 27 as in the case of this embodiment, that is, to place the weighty structural body near the center of the vehicle body for concentration of the mass.

In addition, since the periphery of the weld of the fit member 43 is formed in a truncated-cone shape toward the outer side of the vehicle body, it is possible to significantly increase the strength of the muffler stay 40 compared to the case where the lower end portion 42a of the lower plate 42 is constituted by using a flat plate.

Moreover, the bottom of the truncated-cone-shaped concave portion is provided so as to be offset toward the outer side of the vehicle body with respect to the center of the fit member 43. For this reason, it is possible to reduce the distance between the flange portion 28 of the silencer 27 and the weld of the fit member 43 to thereby reduce the moment load applied on the weld.

It should be noted that the above structure is to be used not only to support the muffler but also as a structure to be used to support another component.
1...motorcycle, 10...engine, 25a, 25b...exhaust pipe, 26...center exhaust pipe, 27...silencer, 28...flange portion, 29...attachment stay, 30...seat frame, 40...muffler stay, 41...upper plate, 42...lower plate, 43...fit member, 45...support hole, 50...rubber member

## Claims

1. An exhaust system support structure, including:
an exhaust system which includes an exhaust pipe (25a, 25b, 26) connected to an exhaust port of an internal combustion engine (10) and extending toward a rear of a vehicle body, and a silencer (27) provided to a rear of the exhaust pipe (25a, 25b, 26);
a stay (40) provided on a seat frame (30) and having a support hole (45); and
a flange portion (28) provided to the silencer (27),
wherein a rubber member (50) is fitted into the support hole (45) of the stay (40), and the flange portion (28) is coupled to the stay (40) with the rubber member (50) interposed therebetween to thereby fix the silencer (27) to a seat frame (30) side,
the exhaust system support structure being **characterized in that**
the support hole (45) of the stay (40) is formed in a cylindrical shape, an inner circumferential surface (43c) of the support hole (45) being provided with a convex portion (43a) along a circumferential direction, and
the rubber member (50) has a cylindrical shape, the rubber member (50) having a groove (50a) on an outer circumferential surface (50c) thereof along a circumferential direction, which is fitted in the convex portion (43a).

2. The exhaust system support structure according to claim 1, **characterized in that** a space is provided between a convex face (43b) of the convex portion (43a) of the support hole (45) and a bottom face (50b) of the groove (50a) of the rubber member (50).

3. The exhaust system support structure according to claim 1 or 2, **characterized in that**
a concave portion is provided in the stay (40), and
the support hole (45) which has a cylindrical shape is provided in a bottom of the concave portion.

4. The exhaust system support structure according to any of the preceding claims, **characterized in that** the bottom of the concave portion is provided so as to be offset toward an outer side of the vehicle body with respect to a center (O) of the support hole (45) in an axial direction of the support hole (45).

5. A support structure for a component of a vehicle which supports components of the vehicle with a rubber member (50) interposed therebetween, **characterized in that**
a support member is provided with a support hole (45) which has a cylindrical shape, and an inward convex portion (43a) is provided to an inner circumferential surface (43c) of the support hole (45), the convex portion (43a) extending along a circumferential direction thereof, and
the rubber member (50) is fitted in the support hole (45) and has a cylindrical shape, the rubber member (50) having a groove (50a) provided on an outer circumferential surface (50c) thereof along a circumferential direction, which is fitted in the convex portion (43a).

6. The support structure for a component of a vehicle according to any of the preceding claims, **characterized in that** a space is provided between a convex face (43b) of the convex portion (43a) of the support hole (45) and a bottom face (50b) of the groove (50a) of the rubber member (50).

## Patentansprüche

1. Halteanordnung für eine Abgasanlage, mit
- einer Abgasanlage, die ein mit einer Abgasöffnung eines Verbrennungsmotors (10) verbundenes und zum Heck eines Fahrzeugkörpers ragendes Abgasrohr (25a, 25b, 26) und einen am hinteren Ende des Abgasrohrs (25a, 25b, 26) vorgesehenen Schalldämpfer (27) umfasst,
- einer an einem Sitzrahmen (30) vorgesehenen und eine Halteloch (45) aufweisenden Strebe (40) sowie
- einem am Schalldämpfer (27) vorgesehenen Flanschabschnitt (28),
wobei ein Gummielement (50) in das Halteloch (45) der Strebe (40) eingepasst und der Flanschabschnitt (28) mit der Strebe (40) mit dem dazwischen angeordneten (50) verbunden ist, um den Schalldämpfer (27) am Sitzrahmen (30) zu fixieren,
**dadurch gekennzeichnet,**
**dass** das Halteloch (45) der Strebe (40) zylindrisch geformt ist, wobei die innere Umfangsfläche (43c) des Haltelochs (45) in Umfangsrichtung mit einem konvexen Abschnitt (43a) versehen ist und
das Gummielement (50) zylindrisch geformt ist und in Umfangsrichtung auf der äußeren Umfangsfläche (50c) eine Rille (50a) aufweist, die in dem konvexen Abschnitt (43a) eingepasst ist.

2. Halteanordnung für eine Abgasanlage nach Anspruch 1, **dadurch gekennzeichnet, dass** zwischen einer konvexen Fläche (43b) des konvexen Abschnitts (43a) des Haltelochs (45) und einer Bodenfläche (50b) der Rille (50a) des Gummielements (50) ein Zwischenraum vorgesehen ist.

3. Halteanordnung für eine Abgasanlage nach Anspruch 1 oder 2, **dadurch gekennzeichnet, dass** in der Strebe (40) ein konkaver Abschnitt und das zylindrisch geformte Halteloch (45) im Boden des konkaven Abschnitts vorgesehen ist.

4. Halteanordnung für eine Abgasanlage nach einem der vorhergehenden Ansprüche, **dadurch gekennzeichnet, dass** der Boden des konkaven Abschnitts so vorgesehen ist, dass er in Bezug auf die Mitte (O) des Haltelochs (45) in Axialrichtung des Haltelochs (45) zur Außenseite des Fahrzeugkörpers versetzt ist.

5. Halteanordnung für eine Komponente eines Fahrzeugs, die Teile des Fahrzeugs mit einem dazwischen angeordneten Gummielement (50) trägt, **dadurch gekennzeichnet, dass**
ein Haltelement mit einem Halteloch (45) versehen ist, das zylindrisch geformt ist, und ein nach innen konvexer Abschnitt (43a) an der inneren Umfangsfläche (43c) des Haltelochs (45) vorgesehen ist, wobei sich der konvexe Abschnitt (43a) in Umfangsrichtung erstreckt, und
das Gummielement (50) in das Halteloch (45) eingepasst ist und eine zylindrische Form aufweist, wobei das Gummielement (50) auf der äußeren Umfangsfläche (50c) in Umfangsrichtung eine Rille (50a) aufweist, die in dem konvexen Abschnitt (43a) eingepasst ist.

6. Halteanordnung für eine Komponente eines Fahrzeugs nach einem der vorhergehenden Ansprüche, **dadurch gekennzeichnet, dass** zwischen einer konvexen Fläche (43b) des konvexen Abschnitts (43a) des Haltelochs (45) und einer Bodenfläche (50b) der Rille (50a) des Gummielements (50) ein Zwischenraum vorgesehen ist.

## Revendications

1. Structure de support de système d'échappement, comportant :
un système d'échappement qui comporte un tuyau d'échappement (25a, 25b, 26) raccordé à un orifice d'échappement d'un moteur à combustion interne (10) et s'étendant vers un arrière d'une carrosserie de véhicule, et un silencieux (27) agencé sur un arrière du tuyau d'échappement (25a, 25b, 26),
une entretoise (40) agencée sur une armature de siège (30) et ayant un trou de support (45), et
une partie de bride (28) agencée sur le silencieux (27),
dans laquelle un élément en caoutchouc (50) est inséré dans le trou de support (45) de l'entretoise (40), et la partie de bride (28) est reliée à l'entretoise (40) en ayant l'élément en caoutchouc (50) intercalé entre celles-ci pour ainsi fixer le silencieux (27) sur un côté d'armature de siège (30),
la structure de support de système d'échappement étant **caractérisée en ce que**
le trou de support (45) de l'entretoise (40) est formé dans une forme cylindrique, une surface circonférentielle intérieure (43c) du trou de support (45) comportant une partie convexe (43a) le long d'une direction circonférentielle, et
l'élément en caoutchouc (50) a une forme cylindrique, l'élément en caoutchouc (50) ayant une gorge (50a) sur une surface circonférentielle extérieure (50c) de celui-ci le long d'une direction circonférentielle, qui est agencée dans la partie convexe (43a).

2. Structure de support de système d'échappement selon la revendication 1, **caractérisée en ce qu'**un espace est créé entre une face convexe (43b) de la partie convexe (43a) du trou de support (45) et une face de fond (50b) de la gorge (50a) de l'élément en caoutchouc (50).

3. Structure de support de système d'échappement selon la revendication 1 ou 2, **caractérisée en ce que**
une partie concave est agencée dans l'entretoise (40), et
le trou de support (45) qui a une forme cylindrique est agencé dans un fond de la partie concave.

4. Structure de support de système d'échappement selon l'une quelconque des revendications précédentes, **caractérisée en ce que** le fond de la partie concave est agencé de manière à être décalé vers un côté extérieur de la carrosserie de véhicule par rapport à un centre (0) du trou de support (45) dans une direction axiale du trou de support (45).

5. Structure de support pour un composant d'un véhicule qui supporte des composants du véhicule en ayant un élément en caoutchouc (50) intercalé entre ceux-ci, **caractérisée en ce que**
un élément de support comporte un trou de support (45) qui a une forme cylindrique, et une partie convexe vers l'intérieur (43a) est agencée sur une surface circonférentielle intérieure (43c) du trou de support (45), la partie convexe (43a) s'étendant le long d'une direction circonférentielle de celle-ci, et
l'élément en caoutchouc (50) est inséré dans le trou de support (45) et a une forme cylindrique, l'élément en caoutchouc (50) ayant une gorge (50a) agencée sur une surface circonférentielle extérieure (50c) de celui-ci le long d'une direction circonférentielle, qui est agencée dans la partie convexe (43a).

6. Structure de support pour un composant d'un véhicule selon l'une quelconque des revendications précédentes, **caractérisée en ce qu'**un espace est créé entre une face convexe (43b) de la partie convexe (43a) du trou de support (45) et une face de fond (50b) de la gorge (50a) de l'élément en caoutchouc (50).
